# EUROPEAN PATENT SPECIFICATION

(11) **EP 2 736 201 B1**
(45) Date of publication and mention of the grant of the patent: **01.01.2020**
(21) Application number: 12814474.8
(22) Date of filing: 29.06.2012
(51) Int. Cl.: H04L 12/741

(54) **ROUTING TABLE MANAGEMENT METHOD AND SYSTEM**
VERFAHREN UND SYSTEM ZUR VERWALTUNG VON ROUTINGTABELLEN
PROCÉDÉ ET SYSTÈME DE GESTION DE TABLE DE ROUTAGE

(30) Priority: 20.07.2011 CN 201110203966
(43) Date of publication of application: 28.05.2014
(73) Proprietor: ZTE Corporation, Shenzhen, Guangdong 518057 (CN)
(72) Inventor: LIN, Ning, Shenzhen Guangdong 518057 (CN)
(74) Representative: Studio Torta S.p.A.
(86) International application number: PCT/CN2012/077885
(87) International publication number: WO 2013/010435

(56) References cited:
- WO-A1-2010/005082
- CN-A- 1 897 560
- CN-A- 101 110 778
- CN-A- 102 263 693
- US-A1- 2007 177 622

## Description

### Field of the Invention

The present invention relates to the field of routers and Layer 3 switch routing management, and in particular, to a routing table management method and system.

### Background of the Invention

Generally, routing may be classified into subnet routing and host routing, in which the egress of the host routing and the egress of the subnet routing all point to a certain port, and therefore, in terms of routing management, usually, when processing the subnet routing and the host routing and performing a writing hardware operation, egress information such as the next hop of the routing containing port information, egress virtual local area network (VLAN) information, destination MAC (DMAC) replacement information and so on is written into a chip together with the routing.

In general, there is no specific correlation between the host routing and the subnet routing, each of which issues its own routing information and next hop information, thus constituting the entire routing table.

Currently, the commonly used setting method for forwarding host routing and subnet routing mainly includes the following steps:
1. finding the next hop information of the corresponding egress of the routing, wherein the next hop information includes port information, DMAC replacement information and VLAN information and so on;
2. associating the host routing or the subnet routing to be configured with this information;
3. writing the host routing or the subnet routing to be configured into a hardware forwarding table together with this information.

However, during practical routing configuration and management processes, there is a certain correlation between the subnet routing and the host routing, and since the next hop of the subnet routing is a host routing, and the actual egress of the subnet routing which points to this host routing is consistent with the egress of the host routing of which the subnet routing points to the next hop.

In terms of general routing management, usually, when configuring a subnet routing, in order to obtain the egress information corresponding to this subnet routing, it is required to query the host routing of the next hop of this subnet routing, wherein the host routing of the next hop corresponding to this subnet routing can be looked up in a software table, and can also be queried in a hardware table, then the egress information of the subnet routing is obtained through the egress information of this host routing, and finally, the subnet routing and the corresponding egress information thereof are written into the hardware together.

In addition, since there may be a plurality of subnet routings pointing to one host routing simultaneously, in a certain case, if the egress information of this host routing changes, then it is required to check the next hops of which subnet routings are this host routing one by one through a subnet routing table, and then the next hop information of these subnet routings will be updated uniformly. It can be seen that the current routing table management method is very complicated and cumbersome, since there is a next hop correlation between the host routing and the subnet routing, the lookup and relation between the host routing and the subnet routing are very complicated, moreover, the number of fluctuations of this routing is also relatively frequent in an actual network, thereby causing low routing management efficiency, and thus greatly effecting the operating efficiency of the routers or the switches over the network.

Document US 2007/0177622 discloses a routing system and a method for managing forwarding information therein. Document US 2010/005082 discloses configuring switches to manage VLANs and creating switch table and partial indexes.

### Summary of the Invention

In view of this, the present invention provides a routing table management method and system, which can correlate the subnet routing and host routing with a link, making the management of subnet routing and host routing more simple and brief, and improving the operating efficiency of the system. The present invention is defined by the independent claims, to which reference should now be made. Specific embodiments are defined by the dependent claims.

In order to realize the above-mentioned object, the following technical solution is adopted by the present invention:
a routing table management method, comprising:
creating a next hop information index table in a host routing; and
the host routing constructing the correlation between the host routing and next hop information corresponding to the host routing according to a specific index in the next hop information index table.

Preferably, after executing all the steps, the method further comprises:
a subnet routing pointing to a corresponding host routing, and acquiring the next hop information index table thereof; and
the subnet routing constructing the correlation between the subnet routing and next hop information corresponding to the subnet routing according to a specific index in the next hop information index table.

Preferably, each specific index in the next hop information index table contains port information, DMAC replacement information, SMAC information and VLAN information of the corresponding next hop information.

More preferably, the port information, DMAC replacement information, SMAC information and VLAN information of the corresponding next hop information contained in each specific index in the next hop information index table can be changed manually or automatically.

A routing table management system, comprising a host router and a next hop information index module, wherein
the next hop information index module is configured to construct the correlation between a specific index in a next hop information index table included therein and the corresponding next hop information; and
the host router is configured to construct the correlation between a host routing and next hop information corresponding to the host routing according to the next hop information index module.

Preferably, the routing table management system further comprises a subnet router, which points to a corresponding host router and acquires a next hop information index table thereof from the next hop information index module, and constructs the correlation between a subnet routing and next hop information corresponding to the subnet routing according to a specific index in the next hop information index table.

More preferably, each specific index in the next hop information index table contains port information, DMAC replacement information, SMAC information and VLAN information of the corresponding next hop information.

Preferably, the port information, DMAC replacement information, SMAC information and VLAN information of the corresponding next hop information contained in each specific index in the next hop information index table can be changed manually or automatically.

It can be seen from the above-mentioned technical solution of the present invention that the embodiments of the present invention, compared to the existing subnet routing management method, adopts a management method of establishing a routing table based on next hop information to manage host routing and subnet routing, and when operating at the host routing and the subnet routing, fewer search and lookup actions between each other are required, and all these are correlated by the next hop information between the two kinds of routings. During particular implementation, especially when there are many routing items, it is more convenient and rapid for the management of the routing table. When applying the routing table management method and system provided in the present invention to perform routing table management, the management efficiency of the routing table is improved, the overheads of routing management computation of the system are saved, and the operational efficiency of the system is increased.

### Brief Description of the Drawings

Fig. 1 is a flowchart of a routing table management method provided in the embodiments of the present invention;
Fig. 2 is a schematic diagram of the configuration of host routing and subnet routing provided in the embodiments of the present invention;
Fig. 3 is a structural schematic diagram of a routing table management system provided in the embodiments of the present invention.

The implementation of the objects, functional characteristics and excellent effects of the present invention will be described further in conjunction with particular embodiments and accompany drawings.

### Detailed Description of the Embodiments

The technical solution of the present invention is described below with reference to the accompanying drawings and embodiments in detail, so as to enable the skilled personnel in the field to better understand the disclosure and implement; but the embodiments are not intended to limit the present invention.

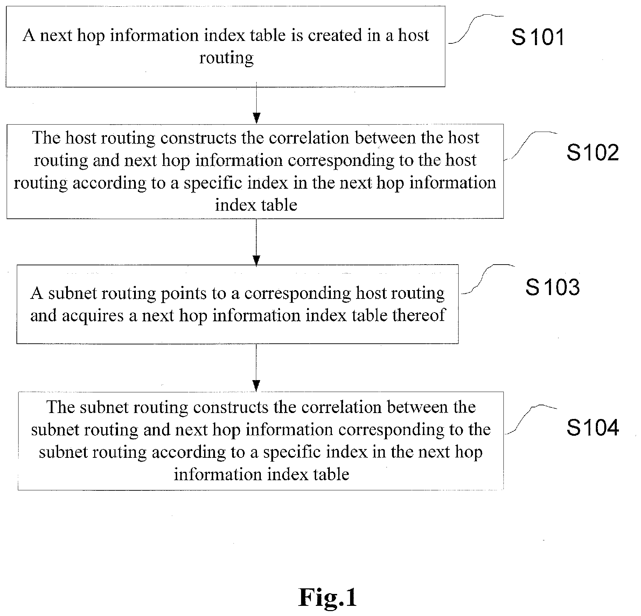

The embodiments of the present invention provide a routing table management method. As shown in Fig. 1, the method includes the following steps:
S101, a next hop information index table is created in a host routing; and
S102, the host routing constructs the correlation between the host routing and next hop information corresponding to the host routing according to a specific index in the next hop information index table.

In step S101, the manner for creating the next hop information index table in the host routing can be manual creation, or be created automatically according to certain rules, in which the next hop information index table contains several independent specific indices, and the specific indices contain port information, destination MAC (DMAC) replacement information, source MAC (SMAC) information and virtual LAN (VLAN) information of the corresponding next hop information, and in addition, those ordinary skilled in the art can easily conceive that the specific indices also contain other information of the next hop information, which will not be listed here one by one.

The specific indices construct the correlation between the host routing and the corresponding next hop information thereof, and in step S102, after the host routing has selected a specific index in the corresponding next hop information index table, the correlation between the host routing and next hop information corresponding to the host routing will be constructed accordingly.

In a preferable implementation of the embodiments of the present invention, after executing all the above steps, the following steps can also be executed:
S103, a subnet routing points to a corresponding host routing, and acquires a next hop information index table thereof; and
S104, the subnet routing constructs the correlation between the subnet routing and next hop information corresponding to the subnet routing according to a specific index in the next hop information index table.

In step S103, during routing forwarding process, the subnet routing will point to the corresponding host routing, and in the embodiments of the present invention, the subnet routing will acquire a next hop information index table thereof from the host routing, and in step S104, the subnet routing constructs the correlation between the subnet routing and the next hop information corresponding to the subnet routing according to a specific index in the next hop information index table, and finds the next hop information corresponding to the subnet routing accordingly.

In a more preferable implementation of the embodiments of the present invention, the port information, destination MAC replacement information, source MAC information and virtual local area network (VLAN) information of the corresponding next hop information contained in each specific index in the next hop information index table can be changed manually or automatically.

According to another aspect of the embodiments of the present invention, when update of the host routing information occurs, the next hop information corresponding to the specific index in the next hop information index table of the host routing can be modified directly, and the port information, DMAC replacement information, SMAC information and VLAN information of the next hop information may be modified manually, or may also be modified automatically according to a certain modification rule.

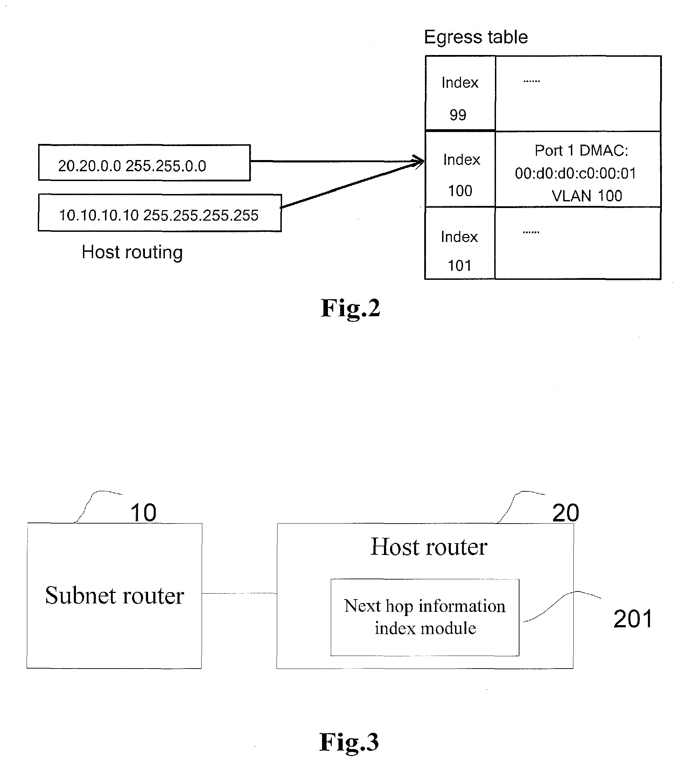

The embodiments of the present invention also provide a routing table management system. As shown in Fig. 3, the system includes a host router 20, and a next hop information index module 201, wherein
the next hop information index module 201 is configured to construct the correlation between a specific index in a next hop information index table included therein and next hop information corresponding to the specific index; and
the host router 20 is configured to construct the correlation between a host routing and next hop information corresponding to the host routing according to the next hop information index module 201.

In a preferable implementation of the embodiments of the present invention, the routing table management system also includes a subnet router 10, which points to the corresponding host router 20 and acquires a next hop information index table thereof from the next hop information index module 201, and constructs the correlation between the subnet routing and the next hop information corresponding to the subnet routing according to a specific index in the next hop information index table, wherein each specific index in the next hop information index table contains port information, DMAC (destination MAC) replacement information, SMAC (source MAC) information and VLAN (virtual LAN) information of the corresponding next hop information.

Similarly, when the information of the host routing is updated, the port information, DMAC replacement information, SMAC information and VLAN information of the corresponding next hop information contained in each specific index in the next hop information index table may be changed manually or automatically.

Hereinafter, the idea of the present invention will be explained with a particular implementation of the embodiments of the present invention.

For creating a next hop information index table (referred to as an egress table hereinafter) in the host routing:
First, the next hop information to which the host routing points is aggregated and organized into an egress table, and then this egress table is numbered to form several independent specific indices. Each independent specific index in this egress table contains all information about the next hop of a certain routing, which contains port information, VLAN information, SMAC information, and DMAC information and so on. During particular operation process, the host routing directly points to a specific index of this egress table, and the next hop of this host routing can be found with the specific index of this egress table, and a routing forwarding operation can be performed accordingly.

While configuring a subnet routing, the next hop of the subnet routing is a corresponding host routing, and during particular implementation process, this subnet routing can obtain the specific index of the egress table to which the subnet routing points through this host routing, and assigns this specific index to the subnet routing directly, and then this subnet routing and next hop corresponding to this subnet routing are bound together.

As such, during particular implementation process, if the next hop of this host routing changes, it doesn't need query which host routings point to this next hop; instead, the specific index in the egress table is changed directly. After having modified the content of the specific index in this egress table, the actual egresses of all the host routings and the subnet routings which point to this next hop have be changed, as such, the modification and update operations of the host routing are completed easily.

Sometimes, the next hop of the subnet routing is also changed with the fluctuation of the routing protocol, and the next hop may change to pointing to host routing B from initially pointing to host routing A, and at this moment, in the embodiments of the present invention, it is merely required to find a specific index of the egress table of host routing B newly, and to assign the specific index of the egress table of hosting routing B to the subnet routing directly, and thus the update operation of the next hop of the subnet routing can be completed. During this process, this operation will not affect the subnet routings which still point to host routing A, and will not affect the pointing of host routing A and host routing B. Therefore, when the routing table management method provided in the embodiments of the present invention is adopted to update or modify subnet routing, there also has beneficial effects of being convenient and rapid.

With reference to Fig. 2, it is a schematic diagram of the configuration of host routing and subnet routing provided in the embodiments of the present invention, which shows the configuration steps of host routing and subnet routing.

In this embodiment, there is one host routing and one subnet routing, wherein the host routing is 10.10.10.10, the next hop information thereof is port: 1, DMAC: 00 d0 d0 00 00 01, VLAN: 100, the subnet routing thereof is 20.20.0.0, and the corresponding next hop thereof is 10.10.10.10.

The particular configuration method has the following steps:
a. an egress table is created in a host routing;
b. next hop information corresponding to this host routing is recorded in this egress table, and the egress table records the next hop information, that is, port: 1, DMAC: 00 d0 d0 00 00 01, VLAN: 100, and the specific index corresponding to this next hop information is assumed as 100, then the specific index 100 is returned to the host routing;
c. host routing 10.10.10.10 directly points to the specific index 100 in the egress table, so that the host routing directly links with the next hop information corresponding to this specific index 100;
d. subnet routing 20.20.0.0 points to host routing 10.10.10.10, and directly obtains the specific index 100 of the host routing, and then the subnet routing also is configured to point to the location of specific index 100 of the host routing, as such, the operation of the subnet routing also correctly pointing to the actual egress of the next hop is completed.

Hereinafter, the steps of updating a host routing will be described.

If the next hop of host routing 10.10.10.10 needs to be updated, the corresponding egress thereof is switched to port: 2, and the corresponding next hop information thereof becomes port: 2, DMAC: 00 d0 d0 00 00 01, VLAN: 100.

Then, the particular host routing update steps is as follows:
a. the location of the specific index 100 of the egress table is found directly with the fact that the specific index of the egress table to which the host routing 10.10.10.10 points is 100; and
b. the port information of the specific index 100 of the egress table is updated as port: 2, wherein the update method may be manual update, and may also be automatic update according to certain rules.

As such, the update actions of the host routing is completed, and at this moment, since all the subnet routings pointing to this host routing point to the location of the specific index 100 of the egress table, the next hop egress information of these subnet routings are updated as port: 2.

Especially during particular implementation process whereby a plurality of subnet routings point to one and the same host routing, when updating a host routing, the routing table management method and system provided in the embodiments of the present invention need not update all relevant subnet routings but merely need to update the next hop information of the host routing, thus improving management efficiency to a certain extent.

Hereinafter, the subnet routing update steps will be introduced.

On the premise that there is one host routing 10.10.10.10, if there is another host routing 11.11.11.11, and the corresponding next hop thereof points to the location of the specific index 101 of the corresponding egress table, and at this moment, if it is required to update the next hop of the subnet routing 20.20.0.0 to 11.11.11.11 from 10.10.10.10, then the following steps need to be performed:
a. the next hop of the subnet routing 20.20.0.0 is updated as 11.11.11.11, specifically, first find a specific index 101 of the egress table of the next hop of this host routing via 11.11.11.11; and
b. the next hop of the subnet routing 20.20.0.0 is updated as the specific index 101 of the egress table directly.

As such, the updating operation of the next hop of the host routing is completed, and it can be seen from this operation that such an operation is merely performed on the subnet routing to be updated, which will not affect the egress pointing of host routing 10.10.10.10 of the original next hop and will not affect the egress pointing of host routing 11.11.11.11 of the new next hop.

In summary, the above-mentioned embodiments of the present invention relate to a method and a system for rapidly performing routing table management by using the next hop of a routing table to link a subnet routing with a host routing, so that the reference relationship between the host routing and the subnet routing is very definite, and no complicated mutual lookup operation is required, simplifying the management of the routing table, saving a large amount of routing management time, and improving the operating efficiency of the system. Moreover, in the above-mentioned embodiments, in the case that the host routing changes, the subnet routing corresponding to the host routing can be forwarded correctly without sensing same.

Above description is only to illustrate the preferred embodiments but not to limit the present invention.

## Claims

1. A routing table management method, **characterized by** comprising:
creating (101) a next hop information index table in a host router (20); and
constructing (102) a correlation between the host router (20)and next hop information corresponding to the host router (20)according to a specific index in the next hop information index table;
pointing (103) a subnet router (10)to a corresponding host router (20), wherein the next hop of the subnet router (10) is a host router (20),
acquiring a next hop information index table from the host router (20); and
constructing (104) a correlation between the subnet router (10)and next hop information corresponding to the subnet router (10)according to a specific index in the next hop information index table;
each specific index in the next hop information index table containing port information, destination MAC replacement information, source MAC information and Virtual Local Area Network, VLAN, information of the corresponding next hop information,
the method further comprising:
when the next hop of the subnet router (10) is changed to pointing to host router B host from initially pointing to host router A, finding a specific index of the egress table of host router B and assigning the specific index of the egress table of host router B to the subnet router (10),
and wherein the egress table is a next hop information index table, which is aggregated and organized with the next hop information to which the host router B points; and the specific index contains all information about the next hop of host router B.

2. The routing table management method of claim 1, **characterized in that** the port information, destination MAC replacement information, source MAC information and VLAN information of the corresponding next hop information contained in each specific index in the next hop information index table can be changed manually or automatically.

3. A routing table management system, **characterized by** comprising a host router (20) and a next hop information index module, wherein:
the next hop information index module is configured to construct the correlation between a specific index in a next hop information index table included therein and the corresponding next hop information; and
the host router (20) is configured to construct the correlation between the host router (20) and next hop information corresponding to the host router (20) according to the specific index in the next hop information index table;
a subnet router (10) is configured to point (103) to a corresponding host router (20), wherein the next hop of the subnet router (10) is a host router (20), and to acquire a next hop information index table from the host router (20), and to construct (104) a correlation between the subnet router (10) and next hop information corresponding to the subnet router (10) according to a specific index in the next hop information index table;
each specific index in the next hop information index table containing port information, destination MAC replacement information, source MAC information and Virtual Local Area Network, VLAN, information of the corresponding next hop information,
wherein the routing table management system is further configured to execute following operation: when the next hop of the subnet router (10) is changed to pointing to host router B from initially pointing to host router A, finding a specific index of the egress table of host router B and assigning the specific index of the egress table of host router B to the subnet router (10),
and wherein the egress table is a next hop information index table, which is aggregated and organized with the next hop information to which the host router B points; and the specific index contains all information about the next hop of host router B.

4. The routing table management system of claim 3, **characterized in that** the port information, destination MAC replacement information, source MAC information and VLAN information of the corresponding next hop information contained in each specific index in the next hop information index table can be changed manually or automatically.

## Patentansprüche

1. Routingtabellen-Verwaltungsverfahren, **dadurch gekennzeichnet, dass** es umfasst:
Erzeugen (101) einer Next-Hop-Informationsindextabelle in einem Host-Router (20); und
Konstruieren (102) einer Korrelation zwischen dem Host-Router (20) und einer Next-Hop-Information, die dem Host-Router (20) entspricht, gemäß einem spezifischen Index in der Next-Hop-Informationsindextabelle;
Richten (103) eines Subnetz-Routers (10) auf einen entsprechenden Host-Router (20), wobei der nächste Hop des Subnetz-Routers (10) ein Host-Router (20) ist,
Erfassen einer Next-Hop-Informationsindextabelle von dem Host-Router (20); und
Konstruieren (104) einer Korrelation zwischen dem Subnetz-Router (10) und einer Next-Hop-Information, die dem Subnetz-Router (10) entspricht, gemäß einem spezifischen Index in der Next-Hop-Informationsindextabelle;
wobei jeder spezifische Index in der Next-Hop-Informationsindextabelle Anschlussinformationen, Ziel-MAC-Ersetzungsinformationen, Quell-MAC-Informationen und Virtual Local Area Network, VLAN, -Informationen der entsprechenden Next-Hop-Information enthält,
wobei das Verfahren weiter Folgendes umfasst:
wenn der nächste Hop des Subnetz-Routers (10) verändert wird, um auf den Host-Router-B-Host nach anfänglichem Richten auf Host-Router A gerichtet zu sein, Finden eines spezifischen Index der Ausgangstabelle von Host-Router B und Zuweisen des spezifischen Index der Ausgangstabelle von Host-Router B zu dem Subnetz-Router (10),
und wobei die Ausgangstabelle eine Next-Hop-Informationsindextabelle ist, die mit der Next-Hop-Information aggregiert und organisiert wird, auf welche der Host-Router B gerichtet ist; und der spezifische Index alle Informationen über den nächsten Hop von Host-Router B enthält.

2. Routingtabellen-Verwaltungsverfahren nach Anspruch 1, **dadurch gekennzeichnet, dass** die Anschlussinformationen, Ziel-MAC-Ersetzungsinformationen, Quell-MAC-Informationen und VLAN-Informationen der entsprechenden Next-Hop-Information, die in jedem spezifischen Index in der Next-Hop-Informationsindextabelle enthalten ist, manuell oder automatisch verändert werden kann.

3. Routing-Tabellenverwaltungssystem, **gekennzeichnet durch** Umfassen eines Host-Routers (20) und eines Next-Hop-Informationsindexmoduls, wobei:
das Next-Hop-Informationsindexmodul konfiguriert ist, um die Korrelation zwischen einem spezifischen Index in einer darin eingeschlossenen Next-Hop-Informationsindextabelle und der entsprechenden Next-Hop-Information zu konstruieren; und
der Host-Router (20) konfiguriert ist, um die Korrelation zwischen dem Host-Router (20) und einer Next-Hop-Information, die dem Host-Router (20) entspricht, gemäß dem spezifischen Index in der Next-Hop-Informationsindextabelle zu konstruieren;
ein Subnetz-Router (10) konfiguriert ist, um auf einen entsprechenden Host-Router (20) gerichtet zu sein (103), wobei der nächste Hop des Subnetz-Routers (10) ein Host-Router (20) ist, und um eine Next-Hop-Informationsindextabelle von dem Host-Router (20) zu erfassen, und um eine Korrelation zwischen dem Subnetz-Router (10) und einer Next-Hop-Information, die dem Subnetz-Router (10) entspricht, gemäß einem spezifischen Index in der Next-Hop-Informationsindextabelle zu konstruieren (104);
wobei jeder spezifische Index in der Next-Hop-Informationsindextabelle Anschlussinformationen, Ziel-MAC-Ersetzungsinformationen, Quell-MAC-Informationen und Virtual Local Area Network, VLAN, -Informationen der entsprechenden Next-Hop-Information enthält,
wobei das Routingtabellen-Verwaltungssystem weiter konfiguriert ist, um folgende Operation auszuführen: wenn der nächste Hop des Subnetz-Routers (10) verändert wird, um auf den Host-Router B nach anfänglichem Richten auf Host-Router A gerichtet zu sein, Finden eines spezifischen Index der Ausgangstabelle von Host-Router B und Zuweisen des spezifischen Index der Ausgangstabelle von Host-Router B zu dem Subnetz-Router (10),
und wobei die Ausgangstabelle eine Next-Hop-Informationsindextabelle ist, die mit der Next-Hop-Information aggregiert und organisiert wird, auf welche der Host-Router B gerichtet ist; und der spezifische Index alle Informationen über den nächsten Hop von Host-Router B enthält.

4. Routingtabellen-Verwaltungssystem nach Anspruch 3, **dadurch gekennzeichnet, dass** die Anschlussinformationen, Ziel-MAC-Ersetzungsinformationen, Quell-MAC-Informationen und VLAN-Informationen der entsprechenden Next-Hop-Information, die in jedem spezifischen Index in der Next-Hop-Informationsindextabelle enthalten ist, manuell oder automatisch verändert werden kann.

## Revendications

1. Procédé de gestion de table de routage, **caractérisé en ce qu'**il comprend :
la création (101) d'une table d'index d'informations de saut suivant dans un routeur hôte (20) ; et
la construction (102) d'une corrélation entre le routeur hôte (20) et des informations de saut suivant correspondant au routeur hôte (20) en fonction d'un index spécifique dans la table d'index d'informations de saut suivant ;
le pointage (103) d'un routeur de sous-réseau (10) sur un routeur hôte (20) correspondant, dans lequel le saut suivant du routeur de sous-réseau (10) est un routeur hôte (20),
l'acquisition d'une table d'index d'informations de saut suivant à partir du routeur hôte (20) ; et
la construction (104) d'une corrélation entre le routeur de sous-réseau (10) et des informations de saut suivant correspondant au routeur de sous-réseau (10) en fonction d'un index spécifique dans la table d'index d'informations de saut suivant ;
chaque index spécifique dans la table d'index d'informations de saut suivant contenant des informations de port, des informations de remplacement de MAC de destination, des informations de MAC source et des informations de réseau local virtuel, VLAN, des informations de saut suivant correspondantes,
le procédé comprenant en outre :
quand le saut suivant du routeur de sous-réseau (10) est changé pour pointer sur un routeur hôte B depuis un pointage initial sur un routeur hôte A, la découverte d'un index spécifique de la table de sortie du routeur hôte B et l'attribution de l'index spécifique de la table de sortie du routeur hôte B sur le routeur de sous-réseau (10),
et dans lequel la table de sortie est une table d'index d'informations de saut suivant, qui est agrégée et organisée avec les informations de saut suivant sur lesquelles pointe le routeur hôte B ; et l'index spécifique contient toutes les informations concernant le saut suivant du routeur hôte B.

2. Procédé de gestion de table de routage selon la revendication 1, **caractérisé en ce que** les informations de port, les informations de remplacement de MAC de destination, les informations de MAC source et les informations VLAN des informations de saut suivant correspondantes contenues dans chaque index spécifique dans la table d'index d'informations de saut suivant peuvent être changées manuellement ou automatiquement.

3. Système de gestion de table de routage, **caractérisé en ce qu'**il comprend un routeur hôte (20) et un module d'index d'informations de saut suivant, dans lequel :
le module d'index d'informations de saut suivant est configuré pour construire la corrélation entre un index spécifique dans une table d'index d'informations de saut suivant incluse dans celui-ci et les informations de saut suivant correspondantes ; et
le routeur hôte (20) est configuré pour construire la corrélation entre le routeur hôte (20) et des informations de saut suivant correspondant au routeur hôte (20) en fonction de l'index spécifique dans la table d'index d'informations de saut suivant ;
un routeur de sous-réseau (10) est configuré pour pointer (103) sur un routeur hôte (20) correspondant, dans lequel le saut suivant du routeur de sous-réseau (10) est un routeur hôte (20), et pour acquérir une table d'index d'informations de saut suivant à partir du routeur hôte (20), et pour construire (104) une corrélation entre le routeur de sous-réseau (10) et des informations de saut suivant correspondant au routeur de sous-réseau (10) en fonction d'un index spécifique dans la table d'index d'informations de saut suivant ;
chaque index spécifique dans la table d'index d'informations de saut suivant contenant des informations de port, des informations de remplacement de MAC de destination, des informations de MAC source et des informations de réseau local virtuel, VLAN, des informations de saut suivant correspondantes,
dans lequel le système de gestion de table de routage est en outre configuré pour exécuter une opération suivante : quand le saut suivant du routeur de sous-réseau (10) est changé pour pointer sur un routeur hôte B depuis un pointage initial sur un routeur hôte A, la découverte d'un index spécifique de la table de sortie du routeur hôte B et l'attribution de l'index spécifique de la table de sortie du routeur hôte B sur le routeur de sous-réseau (10),
et dans lequel la table de sortie est une table d'index d'informations de saut suivant, qui est agrégée et organisée avec les informations de saut suivant sur lesquelles pointe le routeur hôte B ; et l'index spécifique contient toutes les informations concernant le saut suivant du routeur hôte B.

4. Système de gestion de table de routage selon la revendication 3, **caractérisé en ce que** les informations de port, les informations de remplacement de MAC de destination, les informations de MAC source et les informations VLAN des informations de saut suivant correspondantes contenues dans chaque index spécifique dans la table d'index d'informations de saut suivant peuvent être changées manuellement ou automatiquement.
